Europäisches Patentamt

European Patent Office

Office européen des brevets

(11) Veröffentlichungsnummer: **0 214 506**
**A1**

(12) **EUROPÄISCHE PATENTANMELDUNG**

(21) Anmeldenummer: **86111378.5**

(22) Anmeldetag: **18.08.86**

(51) Int. Cl.⁴: **H01B 1/12**

(30) Priorität: **29.08.85 DE 3530819**

(43) Veröffentlichungstag der Anmeldung:
**18.03.87 Patentblatt 87/12**

(84) Benannte Vertragsstaaten:
**AT CH DE FR GB IT LI**

(71) Anmelder: **BAYER AG**
**Konzernverwaltung RP Patentabteilung**
**D-5090 Leverkusen 1 Bayerwerk(DE)**

(72) Erfinder: **Hocker, Jürgen, Dr.**
**Eichenweg 6**
**D-5060 Bergisch-Gladbach 2(DE)**
Erfinder: **Rottmaier, Ludwig**
**Bergstrasse 85**
**D-5068 Odenthal(DE)**

(54) **Elektrisch leitfähige Polymere und Verfahren zu ihrer Herstellung.**

(57) Die Erfindung betrifft ein Verfahren zur Herstellung elektrisch leitfähiger Polymerer, gemäß dem man in einer ersten Stufe aromatische Verbindungen, welche gegebenenfalls heterocyclische Ringe mit O, S oder N als Heteroatom enthalten können, bei 80 bis 500°C im molaren Verhältnis 1:0,5 bis 100 mit Schwefel, einer schwefelspendenden Verbindung, Selen oder Mischungen davon umsetzt und in einer zweiten Stufe die erhaltenen Kondensationsprodukte bei 500 bis 2000°C pyrolisiert und die nach diesem Verfahren erhältlichen elektrisch leitfähigen Polymere.

EP 0 214 506 A1

## Elektrisch leitfähige Polymere und Verfahren zu ihrer Herstellung

Die Erfindung betrifft ein Verfahren zur Herstellung elektrisch leitfähiger Polymerer, das dadurch gekennzeichnet ist, daß man in einer ersten Stufe aromatische Verbindungen, welche gegebenenfalls heterocyclische Ringe mit O, S oder N als Heteroatom enthalten können, bei 80 bis 500° C im molaren Verhältnis 1:0,5 bis 100 mit Schwefel, einer - schwefelspendenden Verbindung, Selen oder Mischungen davon umsetzt und die entstandenen Kondensationsprodukte in einer zweiten Stufe bei 500 bis 2000° C pyrolisiert. Die Erfindung betrifft ferner die nach diesem Verfahren erhältlichen elektrisch leitfähigen Polymere.

Es ist bekannt, daß durch gemeinsames Erhitzen von elementarem Schwefel oder Selen mit mehrkernigen, polykondensierten Aromaten durch Dehydrierungsreaktionen Polymere entstehen (FR-PS 776 146; J. Polym. Sci. Polym. Chem. Ed. 20 - (1982), S. 1119-1132). Substituierte Aromaten und Monomere aus aromatischen und chinoiden Systemen werden nach dem sogenannten Backschmelz- oder Kochschmelzverfahren zu höhermolekularen Farbstoffen umgesetzt (Ullman's Enzyklopädie der technischen Chemie, 4. Aufl. 21, 65 ff). Es entstehen im allgemeinen harzartige, ölige oder amorphe Produkte von undefiniertem Molekulargewicht, bei denen die Ausgangsverbindungen entweder durch Thioether-oder Disulfidbrücken oder durch 5-oder 6-gliedrige heterocyclische Ringe miteinander verknüpft sind.

Verbindungen dieser Art werden als Küpenfarbstoffe verwendet, d.h. sie können zu löslichen Verbindungen reduziert werden und durch Oxidation wieder gefällt und auf einem Substrat fixiert werden.

Ferner ist bekannt, daß die bei 80 bis 500° C entstehenden Umsetzungsprodukte von Aromaten mit Schwefel oder Selen elektrische Leitfähigkeiten im Halbleiterbereich zeigen (DE-OS 3 324 768).

Gemäß der europäischen Patentanmeldung 31 444 hat man bestimmte Phenylen-und Naphthylenreste enthaltende Polymeren z.B. Poly-p-phenylensulfid durch gezielte Oxidation oder Reduktion in den elektrisch leitfähigen Zustand übergeführt. Hierbei geht man jedoch von definierten Polymeren aus, die häufig nur schwer zugänglich sind.

Außerdem ist bekannt, daß Anthracen mit unterschiedlichen Mengen Schwefel, bei 400° C umgesetzt, elektrisch halbleitende Polymere ergibt. (Aust. J. Chem. 1965, 18, 487-91). Die Leitfähigkeit dieser schwefelhaltigen Polymeren ist jedoch für viele Anwendungen nicht ausreichend.

Gemäß der Erfindung werden nun in einfacher Weise aus Schwefel oder Selen enthaltenden aromatischen Polymeren weitgehend unbekannter Feinstruktur neue elektrisch leitende Polymere hergestellt. In der ersten Stufe des erfindungsgemäßen Verfahrens wird in an sich bekannter Weise ein Aromat mit elementarem Schwefel oder Selen oder mit einem Polysulfid in Abwesenheit - (Backschmelze) oder Anwesenheit (Kochschmelze) eines Lösungsmittels bei erhöhter Temperatur umgesetzt. Es erwies sich hierbei, daß gerade die leicht zugänglichen, polykondensierten Aromaten, wie Chrysen, Pyren und leicht zugängliche Heteroaromaten, wie Carbazol als Monomere sehr gut geeignet sind. Die in dieser ersten Stufe erhaltenen Kondensationsprodukte werden anschließend in der zweiten Stufe pyrolisiert. Durch die Hitzebehandlung der Kondensationsprodukte steigt deren elektrische Leitfähigkeit um mehrere Zehner-Potenzen an. Die erfindungsgemäß erhaltenen Polymeren weisen in der Regel eine spezifische elektrische Leitfähigkeit von $>10^{-2}$ S/cm. auf, ohne dotiert (d.h. oxydiert oder reduziert) worden zu sein. Außerdem sind sie gegen chemische Einflüsse sowie gegen höhere Temperaturen außerordentlich stabil Besonders geeignet sind für das erfindungsgemäße Verfahren Aromaten, die 2-9 carbocyclische Ringe und gegebenenfalls 1-3 heterocyclische Ringe mit O, S oder N als Heteroatom enthalten.

Im ersten Reaktionsschritt werden polykondensierte aromatische Bausteine mittels Schwefel oder Selen verknüpft. Diese polykondensierten, aromatischen Bausteine können zusammengesetzt sein aus kondensierten Benzolkernen, z.B. Anthracen, Chrysen, Pyren (Acentypen), diese können wiederum direkt, über Alkylengruppen oder Imino-, Carbonyl-, Thio-, Oxo-, Disulfid-und Sulfongruppen mit weiteren aromatische Einheiten verknüpft sein, z.B. Fluoranthen, Fluoren, Diphenylsulfon, sie können überbrückt sein durch Alkylenreste, z.B. Acenaphthen, chinoide Systeme enthalten, z.B. Anthron, Anthrachinon, Benzanthron oder heterocyclische Ringe enthalten, z.B. Carbazol, Dibenzofuran, Dibenzothiophen, substituiert sein, z.B. durch Alkyl-, Carbonyl-, Carboxyl-, Sulfonyl-und Halogenreste und funktionelle Gruppen tragen, wie z.B. Hydroxyl-, Cyano-, Nitro-und Aminogruppen. Diese aromatischen Bausteine können je für sich oder in Kombination miteinanderr eingesetzt werden. Es können auch Destillationsrückstände von technischen Produkten wie z.B. die Destillationsrückstände, die bei der technischen Anthracen-, Anthrachinon-oder Bisphenol-Herstellung oder die Destillationsrückstände, die bei Crackprozessen von Erdöl oder Erdölprodukten anfallen, eingesetzt werden. Ihre Verknüpfung mittels Schwefel oder Selen findet bevorzugt in der Schmelze statt. Dazu werden Schwefel, schwefelspendende Agenzien, Selen oder Mischungen daraus -im folgenden "Chalkogen" genannt -mit dem Aromat vermischt und erhitzt.

Die Menge an "Chalkogen" kann 100 Mol bis 0,5 mol pro mol des Aromaten betragen, bevorzugt ist 1 bis 10 mol "Chalkogen" pro mol Aromat. Die Reaktionstemperatur ist an der Reaktivität und der Flüchtigkeit der aromatischen Verbindung zu orientieren. Man kann bei Temperaturen von 80 bis 500° C arbeiten, bevorzugt bei 180 bis 360° C für Schwefel, bei 300 bis 360° C für Selen.

Schwefelspendende Agenzien im Sinne der Erfindung sind insbesondere Metallpolysulfid und Schwefelhalogenid wie Natriumpolysulfid, Kaliumpolysulfid, Calciumpolysulfid, Dischwefeldichclorid.

Die Reaktionszeit kann von 15 Min. bis 5 Tage betragen. Bevorzugt sind Reaktionszeiten von 2 bis 45 Stunden. Für Reaktionen mit Schwefel werden insbesondere Reaktionszeiten zwischen 3 und 20 Stunden bevorzugt.

Die Reaktion kann unter Schutzgas durchgeführt werden, was sich besonders bei hohen Reaktionstemperaturen empfiehlt.

Gegebenenfalls kann die Reaktion auch in Anwesenheit eines Lösungsmittels durchgeführt werden. Prinzipiell sind dabei alle gegenüber Schwefel, schwefelspendendem Agens und Selen und gegenüber dem aromatischen Reaktionspartner unter den Reaktionsbedingungen inerten Lösungsmittel geeignet. Verwendbare Lösungsmittel sind aliphatische Kohlenwasserstoffe, fluorierte und chlorierte Kohlenwasserstoffe, Wasser, Mono-und Oligoalkanole, Ether, bevorzugt Glykolether, Dimethylformamid, N-Methylpyrrolidon sowie aliphatische Sulfide, Sulfoxide und Sulfone.

In Anwesenheit eines Lösungsmittels kann die Reaktionstemperatur bis zu 300° C betragen, bevorzugt ist ein Bereich von 50 bis 250° C, insbesondere der Bereich von 80 bis 200° C. Gegebenenfalls muß die Reaktionstemperatur durch Druckerhöhung aufrecht erhalten werden.

Die Reaktionszeit der in Lösung stattfindenden Reaktion beträgt 1 bis 50 Stunden, bevorzugt ist der Bereich von 1 bis 10 Stunden.

Zur Beschleunigung der Reaktion können gegebenenfalls geringe Mengen katalytisch wirksamer Substanzen wie Metalle, Metallsalze, Metalloxide, Metallhydroxide oder Iod zugegeben werden.

Die in der ersten Reaktionsstufe erhaltenen Kondensationsprodukte können direkt weiterverarbeitet werden. Gegebenenfalls kann auch nicht gebundener Schwefel vorher entfernt werden. Dies ist bevorzugt durch Extraktion mit Toluol möglich. Der nicht gebundene Schwefel kann gegebenenfalls auch erst in der zweiten Stufe durch Abdestillieren entfernt werden.

In der zweiten Reaktionsstufe wird das Kondensationsprodukt pyrolisiert und dadurch seine elektrische Leitfähigkeit um mehrere Zehner-Potenzen erhöht. Dies geschieht durch Erhitzen der schwefelhaltigen Kondensationsprodukte auf Temperaturen über 500°C. Bevorzugt wird die zweite Reaktionsstufe bei Temperaturen von 600 bis 1500°C, insbesondere bei 800 bis 1200°C durchgeführt. Allerdings sind auch Temperaturen bis 2000°C oder darüber möglich.

Die Reaktionszeit kann von 30 Min. bis 5 Tage betragen. Bevorzugt sind jedoch Reaktionszeiten von 2 Stunden bis 2 Tagen. Selbstverständlich sind die Reaktionszeiten stark von der Reaktionstemperatur abhängig und können insbesondere bei hohen Temperaturen, auch weniger als 30 Minuten betragen.

Die Pyrolyse wird bevorzugt unter Schutzgas wie Stickstoff oder Argon durchgeführt, kann jedoch gegebenenfalls auch ohne Schutzgas durchgeführt werden. Es ist sowohl eine kontinuierliche also auch eine diskontinuierliche Verfahrensweise möglich.

Die erfindungsgemäß hergestellten Produkte zeigen auch ohne zusätzliche Dotierung elektrische Leitfähigkeiten von $> 10^{-2}$ S/cm, vorzugsweise $> 1$ S/cm. Sie enthalten zwischen 0,1 und 50 %, vorzugsweise zwischen 1 und 40 % und ganz besonders bevorzugt zwischen 2 und 12 % gebundenen, das heißt eingebauten Schwefel. Außerdem sind die erfindungsgemäß hergestellten Produkte hochtemperaturstabil und chemikalienbeständig.

Allerdings kann in einzelnen Fällen durch Dotierung bzw. Intercalation die elektrische Leitfähigkeit noch erhöht werden. Möglich ist eine p-und n-Dotierung. Zur p-Dotierung verwendet man Elektronenakzeptoren sowie Brönsted-Säuren, beispielsweise:

Halogen-und Interhalogenverbindungen, wie z.B. $Cl_2$, $F_2$, $Br_2$, $I_2$, $ICl$, $IBr$. Halogenverbindungen, wie z.B. $AsF_5$, $SbF_5$, $SbCl_5$, $AsCl_5$, $PF_5$, $POF_3$. Salze des dreiwertigen Eisens, wie z.B. $FeF_3$, $FeCl_3$, $FeBr_3$, $Fe(ClO_4)$. Salze des dreiwertigen Cobalts. Oxide wie z.B. $NO$, $NO_2$.

Protonsäuren, wie z.B. $H_2SO_4$, $HClO_4$, $HNO_3$, Sulfonsäuren, sowie Sauerstoff, Ozon und Peroxyverbindungen.

Zur n-Dotierung verwendet man Elektronendonatoren, z.B. Alkalimetalle, Erdalkalimetalle, deren Naphthalide, wie Na-, K-Naphthalide, deren Amide oder auch Amine.

Die p-und n-Dotierung kann auch elektrochemisch durchgeführt werden.

Die Dotierung kann dadurch erfolgen, daß man das Dotierungsmittel gasförmig auf die erfindungsgemäßen höhermolekularen organischen Verbindungen einwirken läßt, daß man das Dotierungsmittel suspendiert oder gelöst in einem inerten Lösungsmittel direkt zum erfindungsgemäßen Polymer gibt, daß man das Dotierungsmittel zu einer Suspension des Polymers gibt oder daß man eine Lösung oder Suspension des Dotierungsmittels zu einer Suspension des Polymers gibt.

Die Dotierung kann in einem Temperaturbereich von -100° C bis +350° C erfolgen, vorzugsweise von -50 bis +200° C, insbesondere von 0 bis 100° C.

Der Dotierungsgrad, d.h. die Menge Dotierungsmittel, die mit dem Polymer reagiert hat oder von ihm absorbiert wurde, hat einen Einfluß auf die elektrische Leitfähigkeit und kann von 0,01 Gew.-% bis 250 Gew.-%, bezogen auf das Polymer, betragen. Bevorzugt ist ein Bereich von 0,1 bis 150 Gew.-%, insbesondere der Bereich von 1 Gew.-% bis 100 Gew.-%, bezogen auf das Polymer.

Die Dotierungszeit kann von wenigen Sekunden bis zu mehreren Tagen betragen. Bevorzugt ist eine Zeitspanne von 10 Min. bis 48 Stunden, insbesondere von 1 Stunde bis 24 Stunden.

Die erfindungsgemäßen elektrisch leitfähigen Polymere können Verwendung finden in Batterien, in Solarzellen, als Photoleiter, als elektrische Leiter oder Halbleiter in elektronischen Bausteinen, als Elektrodenmaterial sowie zur Antistatikausrüstung von Kunststoffen und zur elektromagnetischen Abschirmung.

Beispiel 1

In einen 6 l Planschliffbecher mit Ankerrührer, Luftkühler, Gasableitung und Thermometer gibt man 1328 g Fluoren und 1536 g Schwefel. Man erhitzt innerhalb 90 Minuten auf 250 bis 270°C und hält 3 Stunden bei dieser Temperatur. Dann wird auf 350°C erhitzt, wobei der Rührer abgestellt wird und hält 6 Stunden bei 350°C. Nach dem Abkühlen wird das Reaktionsgemisch gemahlen. Man erhält 2490 g eines metallisch glänzenden Kondensationsproduktes, welches in einem Planschliffbecher aus Quarzglas mit Gaseinleitung, Thermometer und Gasableitung unter Überleiten von Stickstoff innerhalb 12 Stunden auf 1000°C erhitzt und 10 Stunden bei 1000°C gehalten wird. Man erhält 1323 g eines metallisch glänzenden Polymers mit einer spez. Leitfähigkeit von 14,7 S/cm und einem Schwegelgehalt von 7,2 %.

Beispiel 2

In einem 4 l Planschliffbecher mit Ankerrührer, Gaseinleitung, Gasableitung und Thermometer werden 1780 g Anthracen und 640 g Schwefel in einer Stickstoffatmosphäre aufgeschmolzen und in 3 Stunden auf 350°C erhitzt. Man hält 5 Stunden bei 350° C, wobei nach 4 Stunden der Rührer abgestellt wird. Nach dem Abkühlen wird das Reaktionsgemisch gemahlen. Man erhält 1930 g eines metallisch glänzenden Kondensationsproduktes mit einem Schwefelgehalt von 12,6 %. Dieses Kondensationsprodukt wird in einem Planschliffbecher aus Quarzglas wie in Beispiel 1 innerhalb 12 Stunden auf 1000° C erhitzt und 2 Stunden bei 1000° C gehalten. Man erhält 1475 g eines metallisch glänzenden Polymers mit einer spez. Leitfähigkeit von 4,8 S/cm und einem Schwefelgehalt von 7,5 %.

Beispiel 3

Beispiel 2 wird wiederholt mit dem Unterschied, daß man nach der Aufheizphase die Temperatur 10 Stunden bei 1000° C hält. Man erhält 1461 g eines metallisch glänzenden Polymers mit einer spez. Leitfähigkeit von 14,3 S/cm und einem Schwefelgehalt von 7,4 %.

Beispiel 4

In einem 6 l Planschliffbecher, analog Beispiel 2, werden 1 kg eines flüssigen Crackölrückstandes und 2 kg Schwefel in 2 Stunden auf 250° C erhitzt. Sodann erhitzt man in einer Stunde auf 350° C. Der Rührer wird abgestellt und man hält 4 Stunden bei 350° C. Nach dem Abkühlen erhält man 2384 g eines schwarzen Kondensationsproduktes mit einem Schwefelgehalt von 61,5 %. In einem Planschliffbecher aus Quarzglas, wie in Beispiel 1, werden 2,2 kg dieses Produktes in 4 Stunden auf 1000° C erhitzt und 3 Stunden bei 1000° C gehalten. Man erhält 656 g eines metallisch glänzenden Polymers mit einem Schwefelgehalt von 11,2 % und einer spez. Leitfähigkeit von 4,5 S/cm.

## Beispiel 5

Beispiel 4 wird wiederholt mit dem Unterschied, daß die Pyrolyse 15 Stunden bei 1000° C erfolgt. Man erhält 630 g eines metallisch glänzenden Polymers mit einem Schwefelgehalt von 7,0 % und einer spez. Leitfähigkeit von 17,9 S/cm.

## Beispiel 6

Analog Beispiel 4 werden in der ersten Stufe 2 kg des Cracköírückstandes und 1 kg Schwefel bei Temperaturen bis 350° C kondensiert. Man erhält 2260 g eines schwarzen Kondensationsproduktes, welches in einem Planschliffbecher aus Quarzglas, wie in Beispiel 1, in 5,5 Stunden auf 1000° C erhitzt und 9 Stunden bei 1000° pyrolisiert wird. Es resultieren 1303 g eines metallisch glänzenden Polymers mit einem Schwefelgehalt von 4,9 % und einer spez. Leitfähigkeit von 11,7 S/cm.

## Beispiel 7

In einem 6 l Planschliffbecher, analog Beispiel 2, werden in einer Stickstoffatmosphäre 1157 g Anthracen und 2080 g Schwefel aufgeschmolzen, in 1 Stunde auf 250° C erhitzt und 2,5 Stunden bei 250° C gerührt. Sodann wird in 1 Stunde auf 350° C erhitzt. Der Rührer wird abgestellt und man kondensiert 4 Stunden bei 350° C. Man erhält 2646 g eines metallisch glänzenden Kondensationsproduktes, das nach dem Extrahieren mit Toluol eine spez. Leitfähigkeit von $6,6 \cdot 10^{-5}$ S/cm und einen Schwefelgehalt von 54,5 % aufweist.

2000 g des nichtextrahierten Kondensationsproduktes werden in einem Planschliffbecher aus Quarzglas, wie in Beispiel 1, 7 Stunden bei 350° C gehalten. Danach wird in 4 Stunden auf 900° C erhitzt und 2 Stunden bei 900° C pyrolisiert. Man erhält 1121 g eines metallisch glänzenden Polymers einer spez. Leitfähigkeit von 2,3 S/cm und einem Schwefelgehalt von 35,4 %.

## Ansprüche

1. Verfahren zur Herstellung elektrisch leitfähiger Polymerer, dadurch gekennzeichnet, daß man in einer ersten Stufe aromatische Verbindungen, welche gegebenenfalls heterocyclische Ringe mit O, S oder N als Heteroatome enthalten können, bei 80 bis 500° C im molaren Verhältnis 1 zu 0,5 bis 100 mit Schwefel oder einer schwefelspendenden Verbindung, Selen oder Mischungen davon umsetzt und die erhaltenen Kondensationsprodukte in einer zweiten Stufe bei 500 bis 2000°C pyrolisiert.

2. Verfahren nach Anspruch 1, dadurch gekennzeichnet, daß man aromatische Verbindungen mit 2 -9 carbocyclischen Ringen und gegebenenfalls 1 -3 heterocyclischen Ringen mit O, S oder N als Heteroatome einsetzt.

3. Elektrisch leitfähige Polymere, dadurch erhältlich, daß man in einer ersten Stufe aromatische Verbindungen, welche gegebenenfalls heterocyclische Ringe mit O, S oder N als Heteroatome enthalten können, bei 80 bis 500°C im molaren Verhältnis 1 zu 0,5 bis 100 mit Schwefel oder einer schwefelspendenden Verbindung, Selen oder Mischungen davon umsetzt und die erhaltenen Kondensationsprodukte in einer zweiten Stufe bei 500 bis 2000°C pyrolisiert.

## EUROPÄISCHER RECHERCHENBERICHT

Nummer der Anmeldung

EP 86 11 1378

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,A | EP-A-0 131 189 (BAYER) * Ansprüche 1-3 * & DE-A-3 324 768 | 1-3 | H 01 B 1/12 |
| | ----- | | |

RECHERCHIERTE SACHGEBIETE (Int. Cl.4)

H 01 B 1/00

Der vorliegende Recherchenbericht wurde für alle Patentansprüche erstellt.

| Recherchenort | Abschlußdatum der Recherche | Prüfer |
|---|---|---|
| DEN HAAG | 04-12-1986 | DROUOT M.C. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument
& : Mitglied der gleichen Patentfamilie, übereinstimmendes Dokument

EPA Form 1503 03 82